(19) Europäisches Patentamt / European Patent Office / Office européen des brevets

(11) **EP 4 024 597 B1**

(12) **EUROPEAN PATENT SPECIFICATION**

(45) Date of publication and mention of the grant of the patent:
**20.05.2026   Bulletin 2026/21**

(21) Application number: **20878657.4**

(22) Date of filing: **19.10.2020**

(51) International Patent Classification (IPC):
$H01M\ 50/409^{(2021.01)}$        $H01M\ 10/42^{(2006.01)}$
$H01M\ 10/052^{(2010.01)}$        $H01M\ 50/446^{(2021.01)}$

(52) Cooperative Patent Classification (CPC):
**H01M 50/451; H01M 10/4235; H01M 50/446;**
Y02E 60/10

(86) International application number:
**PCT/KR2020/014242**

(87) International publication number:
**WO 2021/080268 (29.04.2021 Gazette 2021/17)**

(54) **SEPARATOR COMPRISING FLAME-RETARDANT LAYER, AND MANUFACTURING METHOD THEREFOR**

SEPARATOR MIT FLAMMHEMMENDER SCHICHT UND VERFAHREN ZU SEINER HERSTELLUNG

SÉPARATEUR COMPRENANT UNE COUCHE IGNIFUGE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2019   KR 20190130852**

(43) Date of publication of application:
**06.07.2022   Bulletin 2022/27**

(73) Proprietor: **LG ENERGY SOLUTION, LTD.**
**Seoul 07335 (KR)**

(72) Inventors:
• **HAN, Da Kyung**
  **Daejeon 34122 (KR)**
• **KIM, Min Ji**
  **Daejeon 34122 (KR)**
• **JEONG, So Mi**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
CN-A- 106 935 772        CN-A- 110 048 058
JP-A- 2011 519 385        JP-A- 2013 054 967
JP-A- 2016 081 711        KR-A- 20140 069 099
KR-A- 20160 128 725       KR-A- 20180 124 261
KR-B1- 101 696 311

**Description**

[Technical Field]

This application claims the benefit of priority to Korean Patent Application No. 2019-0130852 filed on October 21, 2019.

The present invention relates to a separator including a flame retardant layer and a method of manufacturing the same. More particularly, the present invention relates to a separator having a coating layer including an inorganic material formed on at least one surface of a porous substrate, wherein the separator includes a flame retardant layer between the porous substrate and the coating layer, and a method of manufacturing the same.

[Background Art]

A separator, which is an element constituting a secondary battery, includes a polymer film located between a positive electrode and a negative electrode, the polymer film having a porous structure. The separator serves to isolate the positive electrode and the negative electrode from each other, to prevent electric short circuit between the two electrodes, and to allow an electrolyte and ions to pass therethrough. The separator itself does not participate in electrochemical reaction of a battery. However, the separator affects the performance and safety of the battery due to physical properties thereof, such as electrolytic solution wettability, porosity, and thermal shrinkage. In the entire specification of the present invention, the separator includes both a separator constituted by only a porous substrate and a separator manufactured by coating an inorganic material on at least one surface of the porous substrate.

In recent years, a method of adding a coating layer to a porous substrate and adding various kinds of materials to the coating layer or changing the physical properties of the coating layer in order to strengthen the physical properties of a separator has been attempted. Metal oxide, such as alumina ($Al_2O_3$), or metal hydroxide, such as aluminum hydroxide ($Al(OH)_3$), is mainly used as the material added to the coating layer, which includes inorganic particles. The metal hydroxide absorbs thermal energy generated in a battery at the time of abnormal generation of heat in the battery to inhibit fire breakout or combustion but does not perfectly inhibit shrinkage of the porous substrate.

In Patent Document 1, a portion of a porous substrate is made of an inorganic-based flame retardant and a phosphorus-based flame retardant or a flame retardant film including the flame retardant is added to improve flame retardancy. However, the phosphorus-based flame retardant is focused on the flame retardation effect of blocking oxygen and heat through formation of a barrier film, but the effect of protecting a porous substrate itself required for the performance of a battery is insignificant.

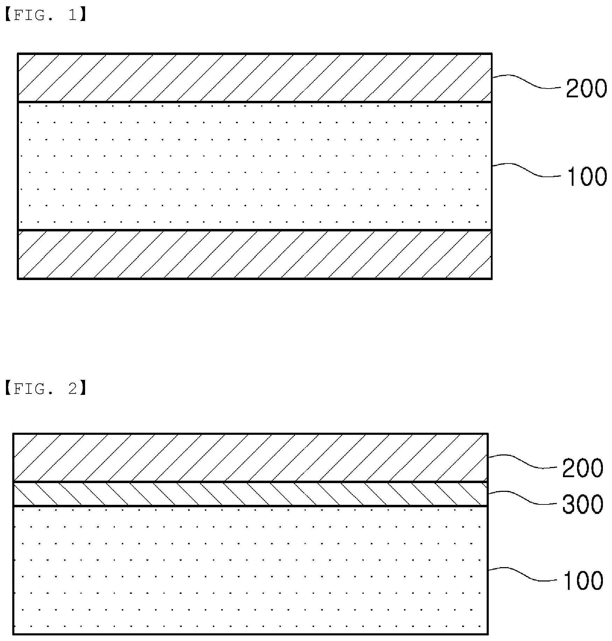

FIG. 1 is a schematic view of a conventional separator having a coating layer including a flame retardant.

In the conventional separator, as shown in FIG. 1, a coating layer 200 is provided on at least one surface of a porous substrate 100, and a flame retardant is added to the coating layer. In the case in which the flame retardant is added to the coating layer 200, the flame retardant that can be added may be limited. Also, in the case in which the flame retardant is excessively added, the coating layer 200, which supplements the physical properties of the separator, may not properly function. Therefore, a structure or a method for increasing the flame retardation effect of the porous substrate 100 while maintaining improved physical properties of the separator is necessary.

CN 106935772A describes a separator including four layers, from bottom to top being a base film, a nano flame retardant layer, an electrospinning nanofiber layer, and a thermal closure layer.

- Prior Art Document -

- Patent Document -

(Patent Document 1) Korean Patent Application Publication No. 2006-0034181 (2006.04.21)

[Disclosure]

[Technical Problem]

The present invention has been made in view of the above problems, and in particular, it is an object of the present invention to provide a separator having excellent flame retardant effect and physical properties by providing a separator including a flame retardant layer between a porous substrate and a coating layer, and a method of manufacturing the same.

[Technical Solution]

In order to accomplish the above object, the present invention provides a separator having a coating layer including an inorganic material formed on at least one surface of a porous substrate, wherein the separator includes a flame retardant layer between the porous substrate and the coating layer.

The flame retardant layer may include an organic-based flame retardant.

The organic-based flame retardant may be changed into a solid or a liquid when temperature increases to form a barrier film configured to prevent an inflammable material from coming into contact with gas including oxygen.

The organic-based flame retardant may be at least one of a phosphorus-based flame retardant or a nitrogen-based flame retardant.

The organic-based flame retardant may be included so as to account for 30 parts by weight to less than 100 parts by weight based on 100 parts by weight of the entire solid content of the flame retardant layer.

The inorganic material may include at least one of a metal oxide, a metal hydrate, or a metal hydroxide.

The flame retardant layer may be present on one surface or opposite surfaces of the porous substrate.

The flame retardant layer may further include a flame retardant synergist.

The flame retardant synergist may include at least one of a silicon-based additive, zinc oxide, tin oxide, a nickel compound, zinc borate, a melamine compound, a chloride-based flame retardant synergist, or a phosphorus-based flame retardant synergist.

The present invention may provide a secondary battery including any one of the separators.

In the present invention, one or more constructions that do not conflict with each other may be selected and combined from among the above constructions.

[Description of Drawings]

FIG. 1 is a schematic view of a conventional separator having a coating layer including a flame retardant.

FIG. 2 is a schematic view of a separator having a flame retardant layer according to a first embodiment of the present invention.

FIG. 3 is a schematic view of a separator having a flame retardant layer according to a second embodiment of the present invention.

FIG. 4 is a schematic view of a separator having a flame retardant layer according to a third embodiment of the present invention.

FIG. 5 is a schematic view showing a flame retardancy evaluation experiment method for comparison between Examples of the present invention and Comparative Examples.

FIG. 6 is a capacity retention graph showing charging and discharging experiment results of Comparative Example 1 and Example 3 of the present invention.

[Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described in more detail.

A separator according to the present invention has a coating layer including an inorganic material formed on at least one surface of a porous substrate, and includes a flame retardant layer between the porous substrate and the coating layer.

The porous substrate is not particularly restricted as long as the porous substrate is made of a porous film that can be used as a separator material for secondary batteries, among porous films having high resistance to an electrolytic solution and a very small pore diameter. The porous substrate may be made of a resin, such as polyethylene, polypropylene, polybutene, polyvinyl chloride, or a mixture or copolymer thereof. The thickness of the porous substrate may be 1 $\mu$m to 100 $\mu$m, preferably 1 $\mu$m to 30 $\mu$m.

The inorganic material used in the coating layer functions to improve thermal and mechanical strength of the separator. The kind of the inorganic material is not particularly restricted as long as the inorganic material provides a uniform thickness to the coating layer and does not undergo oxidation and/or reduction within an operation voltage range of a secondary battery to which the present invention is applied. In the case in which inorganic particles having ion transfer ability are used, ionic conductivity of an electrochemical device may be improved, whereby performance of the battery may be improved. In the case in which inorganic particles having high permittivity are used as the inorganic particles, the degree of dissociation of electrolyte salt, e.g. lithium salt, in a liquid electrolyte may be increased, whereby ionic conductivity of the electrolytic solution may be improved.

Although alumina ($Al_2O_3$) is mainly used as the inorganic material, an additional flame retardant that forms no barrier film may be used in order to improve flame retardancy of the battery. The flame retardant may replace the entirety of the inorganic material of the coating layer or may be used in the state of being mixed with another inorganic material, which may differ depending on the kind and nature of the inorganic material.

The flame retardant that forms no barrier film may be an inorganic-based flame retardant. In this case, the inorganic-based flame retardant may be at least one selected from the group consisting of an antimony-containing compound, a metal hydroxide or metal hydrate, a guanidine-based compound, a boron-containing compound, and a zinc stannate compound.

The antimony-containing compound may be antimony trioxide ($Sb_2O_3$), antimony tetroxide ($Sb_2O_4$), or antimony pentoxide ($Sb_2O_5$). The metal hydroxide or the metal hydrate may be aluminum hydroxide ($Al(OH)_3$), magnesium hydroxide ($Mg(OH)_2$), aluminum oxyhydroxide ($AlO(OH)$), or $CaO·Al_2O_3·6H_2O$. The guanidine-based compound may be guanidine nitrate, guanidine sulfamate, guanidine phosphate, or guanylurea phosphate. The boron-containing compound may be $H_3BO_3$ or $HBO_2$. The zinc stannate compound may be any one selected from the group consisting of $Zn_2SnO_4$, $ZnSnO_3$, and $ZnSn(OH)_6$. Thereamong, the most preferred inorganic-based flame retardant is a metal hydroxide or metal hydrate, and a more preferred inorganic-based flame retardant is aluminum hydroxide ($Al(OH)_3$).

The thickness of the coating layer may be 0.1 $\mu$m to 30 $\mu$m. The porosity of the coating layer may be 10% to 90%, preferably 30% to 70%. Although the particle size of the inorganic material is not particularly restricted, $D_{50}$ may have a range of 20 nm to 10 $\mu$m, specifically 100 nm to 2 $\mu$m, in consideration of the object of forming a coating layer having a uniform thickness and appropriate porosity.

In a particle size distribution curve of particles, $D_{50}$ means the particle size of particles equivalent to 50% of the accumulated number of particles, and the average particle size of the inorganic particles was measured using a Particle Size Analyzer (Product Name: MASTERSIZER 3000; Manufacturer: Malvern).

The content of the inorganic material may be 50 parts by weight to 95 parts by weight, preferably 60 parts by weight to 95 parts by weight, based on 100 parts by weight of the entire solid content of the coating layer. In the case in which the content of the inorganic material is less than 50 parts by weight based on 100 parts by weight of the entire solid content of the coating layer, the content of a binder is too large, whereby the number of empty spaces formed between inorganic particles is reduced. As a result, the pore size and porosity of the coating layer may be reduced, and therefore performance of the battery may be rather reduced. Also, in the case in which the content of the inorganic material is greater than 90 parts by weight based on 100 parts by weight of the entire solid content of the coating layer, the content of the binder is too small, whereby the force of adhesion between the inorganic particles may be reduced, and therefore the mechanical properties of the separator may be reduced.

The coating layer may further include a binder. The binder serves to stably fix the inorganic material to the surface of the porous substrate. For example, the binder may be any one selected from the group consisting of polyvinylidene fluoride-hexafluoropropylene, polyvinylidene fluoride-trichloroethylene, polymethylmethacrylate, polybutylacrylate, polyacrylonitrile, polyvinylpyrrolidone, polyvinylacetate, polyethylene-co-vinylacetate, polyethyleneoxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxymethylcellulose, or a mixture of two or more thereof.

The flame retardant layer located between the porous substrate and the coating layer may include an organic-based flame retardant. The organic-based flame retardant may be changed into a solid or a liquid when temperature increases to form a barrier film configured to prevent an inflammable material from coming into contact with gas including oxygen. The organic-based flame retardant may be at least one of a phosphorus-based flame retardant and a nitrogen-based flame retardant.

The phosphorus-based flame retardant may be any one selected from the group consisting of an alkyl phosphonate-based flame retardant, an alkyl phosphinate-based flame retardant, a triaryl phosphate-based flame retardant, a halogenated alkyl phosphonate-based flame retardant, and a halogenated alkyl phosphate-based flame retardant. A halogen-based flame retardant may be added in order to improve the effect of the phosphorus-based flame retardant.

The nitrogen-based flame retardant may be classified as a nitrogen-containing flame retardant or a flame retardant containing nitrogen and phosphorus. The nitrogen-containing flame retardant may be melamine or melamine cyanurate. The flame retardant containing nitrogen and phosphorus may be melamine phosphate, melamine pyrophosphate, or melamine polyphosphate.

Although the flame retardant layer may use only the phosphorus-based flame retardant or the nitrogen-based flame retardant, the phosphorus-based flame retardant and the nitrogen-based flame retardant may be used together. In the case in which the phosphorus-based flame retardant and the nitrogen-based flame retardant are used together, the effect of increasing flame retardation may be achieved. In the case in which the phosphorus-based flame retardant and the nitrogen-based flame retardant are used together, as described above, the phosphorus-based flame retardant may be included so as to account for 0.1 times to 10 times the nitrogen-based flame retardant (based on weight).

The flame retardant may be included so as to account for 30 parts by weight to less than 100 parts by weight based on 100 parts by weight of the solid content of the flame retardant layer. Preferably, the flame retardant may be included 50 parts by weight to less than 100 parts by weight based on the entire solid content.

The flame retardant layer may further include a flame retardant synergist. The flame retardant synergist may be at least one of a silicon-based additive, zinc oxide, tin oxide, a nickel compound, zinc borate, a melamine compound, a chloride-based flame retardant synergist, and a phosphorus-based flame retardant synergist such as phosphorus or a phosphorus compound.

The flame retardant synergist may be used in various combinations thereof depending on the characteristics of the flame retardant. Any flame retardant synergist other than the above-specified flame retardant synergists may be further included as long as the flame retardant synergist is made of a material capable of improving efficiency of the flame retardant. The flame retardant synergist may be added so as to account for 0.001 times to 0.1 times the total weight of the flame retardant. However, the content of the flame retardant synergist is not limited thereto as long as the flame retardant synergist does not reduce efficiency of the flame retardant.

Although the particle size of each of the flame retardant and the flame retardant synergist is not particularly restricted, $D_{50}$ may be 20 nm to 10 $\mu$m, specifically 100 nm to 4 $\mu$m, such that each of the flame retardant and the flame retardant synergist has the flame retardation effect while having appropriate porosity. The porosity of the porous substrate may be 10 to 90%. The thickness of the flame retardant layer may be greater than 0.5 $\mu$m to 30 $\mu$m, and the porosity of the flame retardant layer may be 20 to 80%. In the case in which the thickness of the flame retardant layer is 0.5 $\mu$m or less, it may be difficult to exhibit the effect due to the flame retardant layer. In the case in which a nail penetration test was carried out in the state in which the thickness of the flame retardant layer according to the present invention was 0.5 $\mu$m or less, the flame retardation effect was not satisfactory in the case in which the thickness of the flame retardant layer was 0.5 $\mu$m or less. In the case in which the thickness of the flame retardant layer is 30 $\mu$m or more, the resistance of the battery may be increased, whereby the capacity of the battery may be reduced.

FIG. 2 is a schematic view of a separator having a flame retardant layer according to a first embodiment of the present invention.

As shown in FIG. 2, the separator according to the first embodiment of the present invention is configured to have a structure in which a flame retardant layer 300 is provided between a porous substrate 100 and a coating layer 200 provided on one surface of the porous substrate 100. The surface on which the flame retardant layer 300 and the coating layer 200 are disposed may be provided at a portion that faces a positive electrode of a battery. The reason for this is that oxygen generated from a positive electrode active material when temperature increases reacts with a material in the battery, whereby temperature increase and fire outbreak may easily occur.

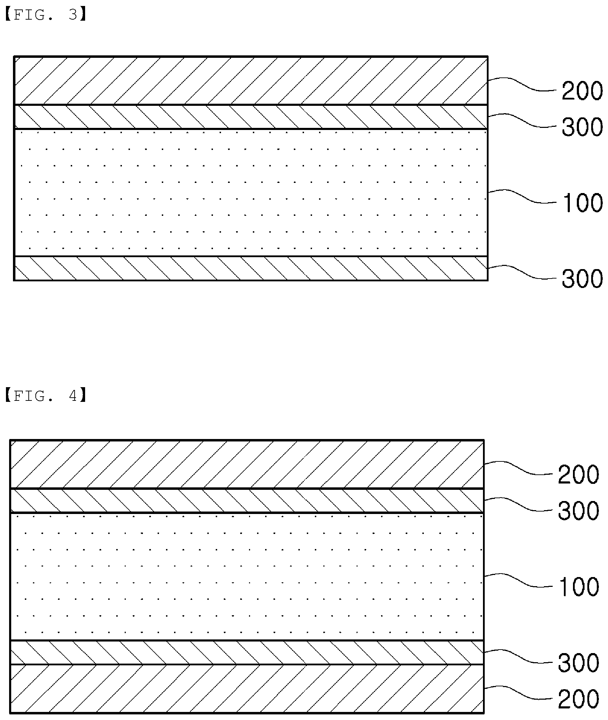

FIG. 3 is a schematic view of a separator having a flame retardant layer according to a second embodiment of the present invention.

In the separator according to the second embodiment of the present invention, as shown in FIG. 3, flame retardant layers 300 may be formed at opposite surfaces of a porous substrate 100, and a coating layer 200 including an inorganic material may be formed on only one of the flame retardant layers 300. The surface to which the coating layer 200 is added may be provided at a portion that faces a positive electrode. The coating layer is disposed so as to face a positive electrode portion, the temperature of which rapidly increases, while the flame retardation effect is imparted to the entirety of a battery, whereby it is possible to prevent short circuit of the battery.

Since the opposite surfaces are surrounded by the flame retardant layers 300, as described above, a barrier film is formed on the entire surface of the porous substrate 100 at an abnormal temperature, whereby the separator does not shrink, and therefore electrical short circuit between the positive electrode and a negative electrode does not occur. As a result, safety of the battery is further improved. The thicknesses of the flame retardant layers 300 on the opposite surfaces of the porous substrate are shown as being equal to each other in FIG. 3. However, the thickness may be changed within a range of greater than 0.5 $\mu$m to 30 $\mu$m. In FIG. 3, the same thicknesses are used as an example.

FIG. 4 is a schematic view of a separator having a flame retardant layer according to a third embodiment of the present invention.

In order to more efficiently protect a battery by forming a barrier film, a structure in which flame retardant layers 300 and coating layers 200 are formed on opposite surfaces of a porous substrate 100 is preferable, as in the third embodiment of FIG. 4. In this case, the thicknesses of the coating layers 200 that face respective electrodes may be equal to each other or may be different from each other, which may differ depending on the function of the flame retardant layer 300 and the capacity of the electrode.

In the case in which a flame retardant that forms no barrier film is further added to each of the coating layers 200, it is possible to primarily secure safety of a battery through endothermic reaction of the flame retardants included in the coating layers 200 at an initial abnormal temperature, and in the case in which the temperature of the battery increases to an abnormal temperature, the flame retardant layers 300 disposed in tight contact with the porous substrate 100 form barrier films, whereby it is possible to increase safety of the battery while protecting the porous substrate 100.

In addition, the present invention may include a secondary battery including a separator corresponding to any one of the separators described above.

A method of manufacturing a separator according to the present invention may include 1) a step of applying a coating solution including a flame retardant to at least one surface of a porous substrate and 2) a step of applying a coating solution including an inorganic material to the at least one surface of the porous substrate of step 1). The coating solution of step 1) or step 2) may be a slurry.

A general method well known in the art to which the present invention pertains may be used as a method of applying the coating solution to the porous substrate or applying the additional coating solution to the porous substrate again. For example, any of various methods, such as a dip coating method, a die coating method, a roll coating method, a comma coating method, or a combination thereof, may be used.

The application step may be performed once or more. In the case in which the application step is performed twice or more, particles having different sizes may be used, or materials having different degrees of particle distribution may be used.

A step of drying the porous substrate may be further included between step 1) and step 2).

In the drying step, an oven or a heating type chamber may be used within a temperature range considering vapor pressure of a solvent, and a method of leaving the porous substrate at room temperature in order to volatilize the solvent may also be used. At this time, a temperature ranging from 25°C to 100°C and a relative humidity of 40% or more may be considered.

As a non-limiting example of a solvent usable when the slurry is manufactured, mention may be made of a solvent selected from the group consisting of an aromatic hydrocarbon-based solvent, an ester-based solvent, a ketone-based solvent, an alcohol-based solvent, a halogen-based solvent, and an aprotic polar organic solvent. As an example of the aromatic hydrocarbon-based solvent, mention may be made of benzene, toluene, xylene, mesitylene, ethylbenzene, diethylbenzene, propylbenzene, chlorobenzene, o-dichlorobenzene, or t-butylbenzene. As an example of the ester-based solvent, mention may be made of ethyl acetate, butyl acetate, or propylene glycol monomethyl ether acetate. As an example of the ketone-based solvent, mention may be made of acetone or cyclohexanone. As an example of the alcohol-based solvent, mention may be made of ethanol or methanol. As an example of the halogen-based solvent, mention may be made of methylene chloride, chloroform, bromoform, or carbon tetrachloride. As an example of the aprotic polar organic solvent, mention may be made of dimethylformamide (DMF), dimethyl sulfoxide (DMSO), N-methyl-2-pyrrolidone (NMP), or N,N-dimethylacetamide (DMAc). These solvents may be used alone or in the form of a mixture of two or more thereof. Preferably, acetone, ethanol, or N-methyl-2-pyrrolidone (NMP) is used. More preferably, N-methyl-2-pyrrolidone (NMP) is used.

It is preferable that the content of the solvent be 500 to 1000 parts by weight based on 100 parts by weight of the flame retardant or the inorganic material. In the case in which the content of the solvent is less than 500 parts by weight, solid content is difficult to properly disperse. In the case in which the content of the solvent is greater than 1000 parts by weight, the solvent is used in an excessive amount, which is uneconomical. However, the content of the solvent may be changed depending on the kind of the flame retardant or the inorganic material.

Step 1) and step 2) may be simultaneously performed.

In the case in which step 1) and step 2) are simultaneously performed, the coating solution including the inorganic material of step 2) may be applied while the coating solution including the flame retardant of step 1) is applied. Alternatively, the case in which the coating solution including the flame retardant of step 1) and the coating solution including the inorganic material of step 2) are formed as a single slurry and the slurry is applied in the state of being separated into layers may also be possible. At this time, the flame retardant and the inorganic material may differ from each other in terms of molecular weight.

In addition, a dispersant may be further included at the time of manufacture of the slurry.

Any dispersant may be used as long as the dispersant is capable of appropriately dispersing the flame retardant or the inorganic material in the solvent. The dispersant includes at least one selected from the group consisting of tertiary amine, ether, thiol, ester having a functional group having a carbon number of 3 or more bonded to a carbon atom of an ester bond and a functional group having a carbon number of 4 or more bonded to an oxygen atom of an ester bond, and ester having a benzene ring bonded to a carbon atom of an ester bond. In addition, a low molecular weight compound may be used as an example thereof. It is preferable that the carbon number of the ether compound be 10 or less. However, the present invention is not limited thereto. However, it is preferable that a dispersant that inhibits the flame retardation effect or emits an additional combustion material not be used in the coating solution including the flame retardant in consideration of the original effect of the flame retardant.

The dispersant may be included so as to account for 2 to 20 parts by weight based on 100 parts by weight of the flame retardant or the inorganic material. In the case in which the dispersant is added in a very small amount, dispersion force may be low. In the case in which the dispersant is added in a large amount, the dispersion force increasing effect is not significant, and properties of the battery may be affected. However, this may vary depending on the kind of the dispersant.

The kind of a binder that can be used at the time of manufacture of the slurry is not particularly restricted as long as the binder is inactive to the battery. As an example of the binder, mention may be made of a compound selected from the group consisting of nitrile butadiene rubber, polyamide-imide (PAI), polyimide (PI), polyamide (PA), polyamic acid, polyethylene oxide (PEO), polystyrene (PS), poly(ethylene-co-propyleneco-5-methylene-2-norbornene) (PEP-MNB), polyvinylidene fluoride (PVDF), polyvinylidene fluoride-co-hexafluoropropylene (PVDF-HFP), polystyrene nitrile-butadiene rubber (PS-NBR), poly(methyl methacrylate) -nitrile butadiene rubber (PMMA-NBR), epoxy resin, cyano resin, and a mixture thereof. It is preferable that the content of the binder be 10 to 50 parts by weight based on 100 parts by weight of the flame retardant or the inorganic material.

Hereinafter, the present invention will be described with reference to the following examples. These examples are provided only for easier understanding of the present invention and should not be construed as limiting the scope of the present invention.

(Comparative Example 1 (hereinafter referred to as A1))

Based on the entire solid content, 75 wt% of $Al_2O_3$ and 25 wt% of a binder and a dispersant were mixed with each other to manufacture a slurry, and the slurry was coated on opposite surfaces of a polyolefin substrate so as to have a thickness of 5 $\mu$m to form coating layers, as shown in FIG. 1.

(Comparative Example 2 (hereinafter referred to as A2))

Based on the entire solid content, 85 wt% of ammonium polyphosphate and 15 wt% of a binder were mixed with each other to manufacture a slurry, and the slurry was coated on opposite surfaces of a polyolefin substrate so as to have a thickness of 5 $\mu$m to form flame retardant layers, as shown in FIG. 1.

(Example 1 (hereinafter referred to as B1))

As shown in FIG. 2, a flame retardant layer was formed on one surface, and a coating layer was formed on the flame retardant layer.

Based on the entire solid content, the flame retardant layer was formed by mixing 85 wt% of ammonium polyphosphate and 15 wt% of a binder with each other to manufacture a slurry and coating the slurry on one surface of a polyolefin substrate so as to have a thickness of 1 $\mu$m.

Based on the entire solid content, the coating layer was formed by mixing 75 wt% of $Al_2O_3$ and 25 wt% of a binder and a dispersant with each other to manufacture a slurry and coating the slurry on the flame retardant layer so as to have a thickness of 4 $\mu$m.

(Example 2 (hereinafter referred to as B2))

As shown in FIG. 3, flame retardant layers were formed on opposite surfaces, and a coating layer was formed on only one of the flame retardant layers.

The portion having only the flame retardant layer was formed by coating a slurry including a flame retardant material on one surface of a polyolefin substrate so as to have a thickness of 5 $\mu$m.

Based on the entire solid content, a slurry formed by mixing 85 wt% of ammonium polyphosphate and 15 wt% of a binder with each other was used as the slurry including the flame retardant material.

The portion having the coating layer formed on the flame retardant layer was formed on the surface of the polyolefin substrate opposite the portion having only the flame retardant layer.

At this time, based on the entire solid content, the flame retardant layer was formed by mixing 85 wt% of ammonium polyphosphate and 15 wt% of a binder with each other to manufacture a slurry and coating the slurry on one surface of the polyolefin substrate so as to have a thickness of 1 $\mu$m, and the coating layer, based on the entire solid content, was formed by mixing 75 wt% of $Al_2O_3$ and 25 wt% of a binder and a dispersant with each other to manufacture a slurry and coating the slurry on the flame retardant layer so as to have a thickness of 4 $\mu$m.

(Example 3 (hereinafter referred to as B3))

As shown in FIG. 4, flame retardant layers were formed on opposite surfaces, and a coating layer was formed on each of the flame retardant layers.

Based on the entire solid content, each of the flame retardant layers was formed by mixing 85 wt% of ammonium polyphosphate and 15 wt% of a binder with each other to manufacture a slurry and coating the slurry on a corresponding surface of a polyolefin substrate so as to have a thickness of 1 $\mu$m.

Based on the entire solid content, each of the coating layers was formed by mixing 75 wt% of $Al_2O_3$ and 25 wt% of a binder and a dispersant with each other to manufacture a slurry and coating the slurry on a corresponding one of the flame retardant layers so as to have a thickness of 4 $\mu$m.

<Experimental Example 1>: Flame retardancy evaluation experiment

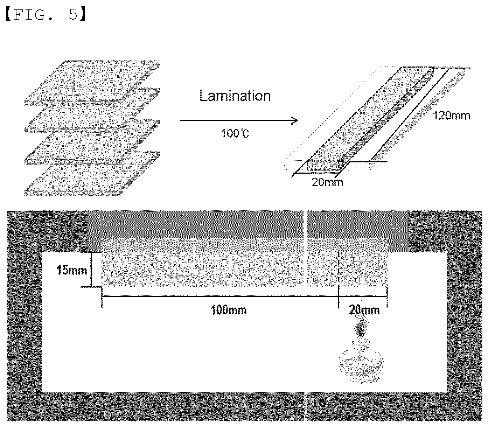

FIG. 5 is a schematic view showing a flame retardancy evaluation experiment method for comparison between Examples of the present invention and Comparative Examples. The concrete experiment method was as follows.

1. The separators of Comparative Examples 1 and 2 (A1 and A2) and Examples 1 to 3 (B1, B2, and B3) were cut to a size of 120 mm in length and 20 mm in width, and four sheets of each separator were laminated at 100°C, as shown in FIG. 5.

2. Upper 5 mm of the width axis of each of the laminated samples of Comparative Examples 1 and 2 and Examples 1 to 3 was fixed to a frame using polyimide tape, and the 20 mm point of the length axis of each sample was measured and marked, as shown in FIG. 5.

3. An alcohol lamp was placed under the 20 mm section of the length axis of each sample marked as described above such that flames reached the sample.

4. Combustion time and length were measured from the 20 mm section of the length axis of each sample marked as described above as a start point, and combustion speed was calculated therefrom.

Table 1 below shows the results thereof.

[Table 1]

|  | Combustion length (mm) | Combustion time (s) | Combustion speed (mm/s) |
|---|---|---|---|
| **A1** | 100 | 13 | 7.8 |
| **A2** | 15 | 15 | 1.0 |
| **B1** | 100 | 32 | 3.1 |
| **B2** | 57 | 21 | 2.7 |
| **B3** | 15 | 10 | 1.5 |

It can be seen from Table 1 above that Example 3 (B3), having the flame retardant layers and the coating layers formed on the opposite surfaces, and Comparative Example 2 (A2), having only the flame retardant layers formed on the opposite surfaces, have the shortest combustion length, and therefore the flame retardation effect is the best in the case in which only the flame retardant layers are provided on the opposite surfaces or in the case in which both the flame retardant layers and the coating layers are provided on the opposite surfaces.

When comparing Comparative Example 1 (A1) and Example 1 (B1) with each other, it can be seen that combustion time in the case in which the flame retardant layer is provided is longer than combustion time in the case in which no flame retardant layer is provided, and therefore fire spreading is delayed when a fire breaks out.

It can be seen, therefore, that, in the case in which a flame retardant layer is provided, combustion speed is reduced, whereby the flame retardation effect is achieved.

<Experimental Example 2>: Thermal shrinkage evaluation experiment

The separators of Comparative Examples 1 and 2 and Example 3 were cut to a size of 5 cm in length (MD) and 5 cm in width (TD) and were stored in a chamber at 150°C for 30 minutes. The degree of shrinkage of each of the separators in the length direction and in the width direction was measured.

In the case of Comparative Example 1, the separator shrank 15% in the length direction and 10% in the width direction. In the case of Comparative Example 2, the separator shrank 30% in the length direction and 23% in the width direction. Also, in the case of Example 3, the separator shrank 14% in the length direction and 10% in the width direction, and it can be seen that there is no difference between Comparative Example 1 and Example 3.

Consequently, it can be seen that, in the case of Comparative Example 1 and Example 3, each of which has the inorganic coating layers, thermal shrinkage is reduced to a similar extent. Also, it can be seen that, even in the case in which the flame retardant layers are provided between the separator substrate and the inorganic coating layers, as in Example 3, the thermal shrinkage reduction effect is achieved.

<Experimental Example 3>: Capacity retention experiment

1. The separator of each of Comparative Example 1 and Example 3, a positive electrode using aluminum as a current collector and using nickel oxide as an active material, and a negative electrode using copper as a current collector and using graphite as an active material were assembled using a general secondary battery assembly method to obtain a lithium secondary battery.
2. The lithium secondary battery was initially (once) charged and discharged using an electrochemical charger/-discharger. At this time, charging was performed to a voltage of 4.3 V by applying current at a current density of 0.1 C-rate, and discharging was performed to 2.5V at the same current density. Such charging and discharging were performed a total of 600 times.

During the charging and discharging processes, as described above, the capacity retention of each battery was measured. At this time, the capacity retention was calculated as follows.

Capacity retention (%) = (Capacity at each cycle/initial capacity) x 100

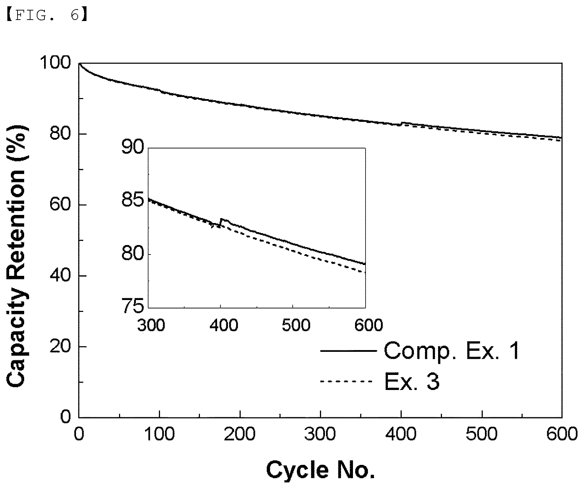

FIG. 6 is a capacity retention graph showing charging and discharging experiment results of Comparative Example 1 and Example 3 of the present invention.

The capacity retention of each battery is shown in FIG. 6. In FIG. 6, the x axis indicates the number of cycles, and the y axis indicates capacity retention. Ex. 3 indicates Example 3, and Comp. Ex. 1 indicates Comparative Example 1. In the graph of FIG. 6, an inner small graph shows only the period between 300 cycles and 600 cycles in a magnified state. Even in the small graph, the x axis indicates the number of cycles, and the y axis indicates capacity retention.

It can be seen from FIG. 6 that Comparative Example 1, in which the inorganic materials were coated on the opposite surfaces of the separator, and Example 3, in which the flame retardant layers were coated on the opposite surfaces of the separator and the inorganic materials were coated thereon, have equivalent lifespan performances.

Consequently, it can be seen that the separator of Example 3 according to the present invention has excellent flame retardation effect and thermal shrinkage and that the capacity of a battery using the same is not reduced.

Those skilled in the art to which the present invention pertains will appreciate that various applications and modifications are possible within the category of the present invention based on the above description.

- Description of Reference Numerals -

100: Porous substrate
200: Coating layer
300: Flame retardant layer

[Industrial Applicability]

A separator according to the present invention includes a flame retardant layer disposed between a porous substrate and a coating layer, whereby safety of the separator is improved while the physical properties of the coating layer are maintained. In addition, the porous substrate is directly protected by the flame retardant layer, whereby it is possible to effectively prevent shrinkage of the porous substrate.

Furthermore, the disposition of the flame retardant layer is changed, whereby the process is simpler and the flame retardation effect is better than in a conventional flame retardant separator.

## Claims

1. A separator having a coating layer comprising an inorganic material formed on at least one surface of a porous substrate, wherein
the separator comprises a flame retardant layer between the porous substrate and the coating layer.

2. The separator according to claim 1, wherein the flame retardant layer comprises an organic-based flame retardant.

3. The separator according to claim 2, wherein the organic-based flame retardant is changed into a solid or a liquid when temperature increases to form a barrier film configured to prevent an inflammable material from coming into contact with gas comprising oxygen.

4. The separator according to claim 2, wherein the organic-based flame retardant is at least one of a phosphorus-based flame retardant or a nitrogen-based flame retardant.

5. The separator according to claim 1, wherein the inorganic material comprises at least one of a metal oxide, a metal hydrate, or a metal hydroxide.

6. The separator according to claim 1, wherein the flame retardant layer is present on one surface or opposite surfaces of the porous substrate.

7. The separator according to claim 1, wherein the coating layer is present on opposite surfaces of the porous substrate.

8. The separator according to claim 1, wherein the flame retardant layer further comprises a flame retardant synergist.

9. The separator according to claim 8, wherein the flame retardant synergist comprises at least one of a silicon-based additive, zinc oxide, tin oxide, a nickel compound, zinc borate, a melamine compound, a chloride-based flame retardant synergist, or a phosphorus-based flame retardant synergist.

10. A secondary battery comprising the separator according to any one of claims 1 to 9.

## Patentansprüche

1. Separator mit einer Beschichtungsschicht, die ein anorganisches Material umfasst und auf mindestens einer Oberfläche eines porösen Substrats ausgebildet ist, wobei
der Separator eine flammhemmende Schicht zwischen dem porösen Substrat und der Beschichtungsschicht umfasst.

2. Separator gemäß Anspruch 1, wobei die flammhemmende Schicht ein Flammschutzmittel auf organischer Basis umfasst.

3. Separator gemäß Anspruch 2, wobei sich das Flammschutzmittel auf organischer Basis bei steigender Temperatur in einen Feststoff oder eine Flüssigkeit umwandelt, um einen Barrierefilm zu bilden, der so konfiguriert ist, dass er verhindert, dass ein brennbares Material mit sauerstoffhaltigem Gas in Kontakt kommt.

4. Separator gemäß Anspruch 2, wobei das Flammschutzmittel auf organischer Basis mindestens eines aus einem Flammschutzmittel auf Phosphorbasis oder einem Flammschutzmittel auf Stickstoffbasis ist.

5. Separator gemäß Anspruch 1, wobei das anorganische Material mindestens eines aus einem Metalloxid, einem Metallhydrat oder einem Metallhydroxid umfasst.

6. Separator gemäß Anspruch 1, wobei die flammhemmende Schicht auf einer Oberfläche oder auf gegenüberliegenden Oberflächen des porösen Substrats vorhanden ist.

7. Separator gemäß Anspruch 1, wobei die Beschichtungsschicht auf gegenüberliegenden Oberflächen des porösen Substrats vorhanden ist.

**8.** Separator gemäß Anspruch 1, wobei die flammhemmende Schicht ferner einen Flammschutzsynergisten umfasst.

**9.** Separator gemäß Anspruch 8, wobei der Flammschutzsynergist mindestens eines aus einrm Additiv auf Siliziumbasis, Zinkoxid, Zinnoxid, einer Nickelverbindung, Zinkborat, einer Melaminverbindung, einem Flammschutzsynergisten auf Chloridbasis oder einem Flammschutzsynergisten auf Phosphorbasis umfasst.

**10.** Sekundärbatterie, die den Separator gemäß mindestens einem der Ansprüche 1 bis 9 umfasst.

**Revendications**

**1.** Séparateur présentant une couche de revêtement comprenant un matériau inorganique formé sur au moins une surface d'un substrat poreux, dans lequel
le séparateur comprend une couche ignifuge entre le substrat poreux et la couche de revêtement.

**2.** Séparateur selon la revendication 1, dans lequel la couche ignifuge comprend un retardateur de flamme organique.

**3.** Séparateur selon la revendication 2, dans lequel le retardateur de flamme organique est transformé en un solide ou un liquide lorsque la température augmente pour former un film barrière configuré pour empêcher un matériau inflammable d'entrer en contact avec un gaz comprenant de l'oxygène.

**4.** Séparateur selon la revendication 2, dans lequel le retardateur de flamme organique est au moins un retardateur parmi un retardateur de flamme à base de phosphore ou un retardateur de flamme à base d'azote.

**5.** Séparateur selon la revendication 1, dans lequel le matériau inorganique comprend au moins un élément parmi un oxyde de métal, un hydrate de métal ou un hydroxyde de métal.

**6.** Séparateur selon la revendication 1, dans lequel la couche ignifuge est présente sur une surface ou sur des surfaces opposées du substrat poreux.

**7.** Séparateur selon la revendication 1, dans lequel la couche de revêtement est présente sur des surfaces opposées du substrat poreux.

**8.** Séparateur selon la revendication 1, dans lequel la couche ignifuge comprend en outre un élément synergiste retardateur de flamme.

**9.** Séparateur selon la revendication 8, dans lequel l'élément synergiste retardateur de flamme comprend au moins un élément parmi un additif à base de silicium, un oxyde de zinc, un oxyde d'étain, un composé de nickel, un borate de zinc, un composé à base de mélamine, un élément synergiste retardateur de flamme à base de chlorure ou un élément synergiste retardateur de flamme à base de phosphore.

**10.** Batterie secondaire comprenant le séparateur selon l'une quelconque des revendications 1 à 9.

【FIG. 1】

200

100

【FIG. 2】

200

300

100

【FIG. 3】

200

300

100

300

【FIG. 4】

200

300

100

300

200

【FIG. 5】

【FIG. 6】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190130852
- CN 106935772 A

- KR 20060034181